# FASCICULE DE BREVET EUROPEEN

(11) **EP 0 329 513 B1**
(45) Date de publication et mention de la délivrance du brevet: **20.04.1994**
(21) Numéro de dépôt: 89400298.9
(22) Date de dépôt: 02.02.1989
(51) Int. Cl.: B60R 11/02

(54) **Protection d'autoradio par carte à puce**
Diebstahlsicherungssystem mit Chipkarte für ein Autoradio
Antitheft device with an IC card for a car radio

(30) Priorité: 05.02.1988 FR 8801366
(43) Date de publication de la demande: 23.08.1989
(73) Titulaire: SGS-THOMSON MICROELECTRONICS S.A., 94250 Gentilly (FR)
(72) Inventeur: Mirabel, Jean-Michel, F-75116 Paris (FR)
(74) Mandataire: Ballot, Paul Denis Jacques

(56) Documents cités:
- EP-A- 0 108 270
- DE-A- 3 043 593
- DE-C- 3 520 395
- US-A- 4 494 114
- US-A- 4 694 492

## Description

L'invention concerne la protection d'appareils de radio connus généralement sous le nom d'autoradios qui sont montés dans les voitures pour que les conducteurs et passagers puissent écouter les émissions radiodiffusées pendant les trajets en voiture. Certains de ces appareils sont également des magnétophones à cassettes et permettent d'écouter des paroles ou de la musique préenregistrés.

L'expérience montre que ces appareils sont très fréquemment l'objet de vols dans les voitures et on a essayé de prévoir divers moyens pour éviter ces vols.

Tout d'abord, il est classique de monter les autoradios de manière amovible de sorte que le conducteur peut emporter l'appareil lorsqu'il a fini son trajet. On comprendra que cette solution n'est pas pratique et pas universelle car il y a toujours des circonstances où le propriétaire de l'autoradio ne peut pas emmener l'appareil avec lui, et il est alors obligé de le laisser dans la voiture.

On a proposé d'autres solutions, l'une d'elles étant utilisable dans le cas où l'appareil comporte un clavier de touches de présélection servant à définir des préréglages de fréquence d'accord pour que l'utilisateur puisse, par simple enfoncement d'une touche, obtenir l'émission radiodiffusée correspondant à la fréquence prérèglée pour cette touche; dans ce cas, on peut utiliser le clavier à touches de présélection pour composer un code d'autorisation de fonctionnement, code que seul le propriétaire connaît et sans lequel l'appareil ne peut pas fonctionner. Mais cette solution n'est pas totalement inviolable car le voleur peut, compte tenu du faible nombre de touches de présélection, arriver à trouver le code et à utiliser l'appareil.

Une autre solution, également utilisable dans le cas des appareils comportant un clavier à touches de présélection, consiste simplement à construire ce clavier de manière amovible, de sorte que l'utilisateur peut emporter le clavier lorsqu'il quitte son véhicule; l'appareil est alors inutilisable. Là encore, l'inconvénient est qu'il faut emporter, à chaque fois qu'on quitte le véhicule, un objet qui est encore encombrant, bien que moins encombrant que l'autoradio complet.

On connaît aussi l'utilisation d'une carte magnétique, optique ou à codes barre pour autoriser le fonctionnement de l'autoradio (voir DE-U 87 10 035 qui correspond au préambule de la revendication 1).

On a proposé aussi des appareils dont la commande de marche-arrêt ne peut se faire que par un boîtier séparé de l'appareil, du genre des boîtiers de télécommande de télévision, et c'est ce boitier qui est emporté par le possesseur de l'autoradio lorsqu'il quitte son véhicule. Mais le boîtier de télécommande est également un objet relativement encombrant à emporter.

La présente invention propose une solution très commode et pratiquement inviolable pour protéger les appareils tels que les autoradios sans qu'il soit nécessaire de les enlever à chaque fois ou d'enlever à chaque fois une partie importante comme le clavier de présélection ou le boîtier de télécommande.

Telle qu'elle est revendiquée, l'invention concerne un système de protection contre le vol, notamment d'appareils amovibles tels que des autoradios, comprenant une carte à mémoire (CP) comportant une information mémorisée spécifique de l'appareil à protéger, et un moyen dans l'appareil à protéger pour recevoir une information et n'autoriser le fonctionnement de l'appareil que si l'information lue est celle qui correspond à l'appareil considéré.

Selon l'invention, le système comporte un moyen pour interdire le retrait de l'appareil en l'absence de l'information mémorisée dans la carte et pour autoriser ce retrait en présence de cette information, et la carte est une carte à mémoire électronique comportant un microprocesseur pour aller lire l'information mémorisée et transférer l'information à l'appareil lors de la mise sous tension de l'appareil contenant la carte.

Ainsi, dans une fabrication d'appareils auto radio en serie, chaque appareil serait livré avec une carte spécifique qui va avec lui mais qui ne va pas avec un autre appareil de la même fabrication.

L'utilisateur n'aura alors qu'à introduire la carte dans l'appareil lorsqu'il veut le faire fonctionner, et à retirer la carte lorsqu'il quitte son véhicule. La carte à mémoire n'est pas un objet encombrant puisqu'on peut très bien lui donner une dimension de quelques centimètres de côté et 1 à 2 millimètres d'épaisseur; elle peut être montée en porte-clé.

L'utilisateur n'a pas à utiliser cette carte avec un code confidentiel d'habilitation comme on le prévoit pour des cartes de type bancaire. Seule la concordance entre l'information contenue dans la carte et une information correspondante contenue dans l'appareil avec lequel la carte a été vendue entraîne l'autorisation de fonctionnement de l'appareil.

Dans un mode de réalisation, on pourra prévoir que l'appareil est monté de manière amovible (sur un tiroir extractible), et que c'est seulement en présence de la carte que l'appareil peut être extrait de son logement. Ainsi, non seulement il faut la carte adéquate pour faire fonctionner l'appareil, mais il faut aussi cette carte pour le retirer de son logement et l'emporter. On assure donc une double sécurité.

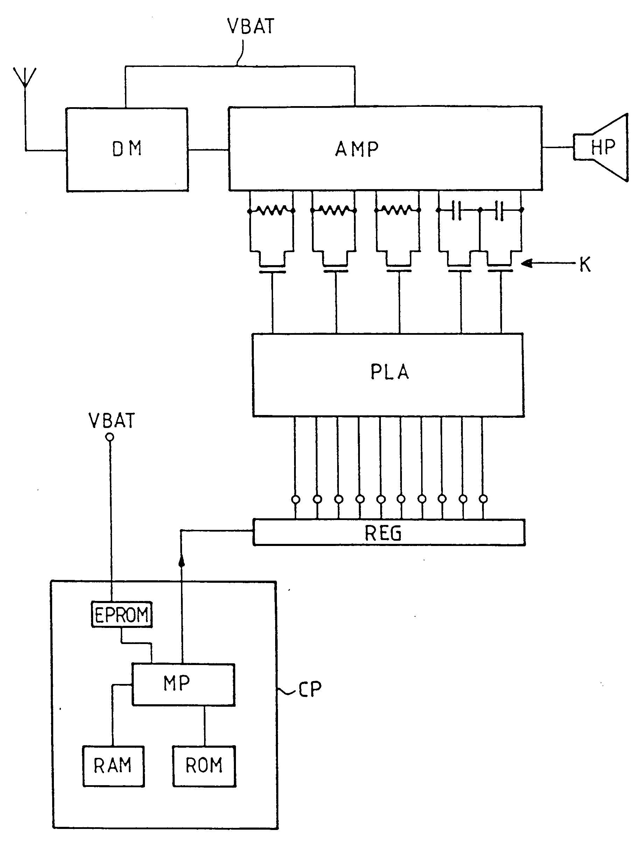

D'autres caractéristiques et avantages de l'invention apparaîtront à la lecture de la description détaillée qui suit et qui est faite en référence au dessin annexé dans lequel la figure unique représente un mode de réalisation de l'invention.

L'appareil protégé selon l'invention est représenté sur la figure. Dans l'exemple précisément décrit, il s'agit d'un récepteur de radio comprenant des circuits classiques qui n'ont pas à être précisément décrits mais qui comprennent par exemple un circuit de détection et démodulation de fréquence désigné par la référence DM, et un circuit amplificateur AMP ayant son entrée reliée à la sortie du circuit DM et sa sortie reliée à un haut-parleur HP.

On va décrire un mode de réalisation particulier du système de protection selon l'invention, mais seulement à titre d'exemple, d'autres réalisations très différentes pouvant être utilisées.

Dans l'exemple choisi, l'amplificateur peut comprendre des éléments réglables tels que des résistances, des capacités, etc., dont les valeurs doivent être précisément définies pour que l'amplificateur fonctionne. On prévoit alors que les résistances sont réalisées par mise en série ou en parallèle d'un certain nombre de résistances ou de capacités élémentaires chacune reliée à un interrupteur individuel permettant de connecter ou au contraire de court-circuiter la résistance ou la capacité élémentaire correspondant à cet interrupteur. Les interrupteurs, désignés par la référence générale K sont par exemple des transistors MOS dont les grilles peuvent être commandées par les sorties d'un réseau logique programmable PLA à N entrées et P sorties. Sur la figure, on a représenté un très petit nombre d'interrupteurs et donc de sorties et d'entrées du réseau PLA, mais dans la réalité il vaut mieux prévoir un nombre plus important pour améliorer l'inviolabilité du système.

Pour que l'amplificateur fonctionne, il faut que les sorties du réseau logique programmable fournissent exactement les bits 0 et 1 qui conviennent pour connecter précisément les valeurs de résistances et capacités permettant de faire fonctionner l'amplificateur. Si un bit est erroné, cela veut dire qu'au moins un résistance ou une capacité n'aura pas la valeur requise et l'amplificateur ne fonctionnera pas; on peut d'ailleurs prévoir aussi que certains interrupteurs servent simplement à établir des liaisons nécessaires ou servent à court-circuiter des conducteurs qui ne doivent pas l'être normalement, ces interrupteurs faisant aussi partie des interrupteurs commandés par les sorties du réseau logique programmable. Par conséquent si une des sorties du réseau PAL commandant un tel interrupteur n'est pas à l'état logique correct, une liaison ne sera pas établie ou un court-circuit sera formé, empêchant dans les deux cas le fonctionnement du circuit.

Pour que toutes les sorties du réseau aient les bonnes valeurs logiques, il faut que les entrées de ce réseau aient des valeurs bien spécifiées qui dépendent évidemment de la constitution du réseau; le réseau est programmable par exemple par fusibles, et on prévoit que les réseaux sont programmés individuellement appareil par appareil selon une configuration qui varie d'un appareil au suivant.

Par conséquent pour faire fonctionner un appareil donné, il faudra une certaine configuration de bits à l'entrée du réseau programmable à N entrées, et pour faire fonctionner un autre appareil il faudra une autre configuration de bits sur les N entrées.

En l'absence de la carte à mémoire prévue selon l'invention, les entrées du réseau programmable ne sont pas connectées ou sont connectées à une configuration de bits quelconque. Seule la présence de la carte à mémoire permet d'appliquer la configuration de bits spécifique de l'appareil correspondant à cette carte à mémoire.

L'appareil à protéger comprend une fente d'introduction pour la carte à mémoire, avec les moyens électromécaniques classiques permettant de connecter électriquement la carte et l'appareil, aussi bien en ce qui concerne l'alimentation de la carte (par une tension de batterie VBAT qui est la même que celle qui alimente les circuits DM et AMP de l'appareil), qu'en ce qui concerne le transfert d'informations entre la carte et l'appareil.

Par exemple, on peut prévoir que la carte, désignée par CP sur la figure, comprend un petit microprocesseur MP associé à une mémoire de travail RAM et à une mémoire de programme ROM comme cela est classique.

Les programmes stockés dans la mémoire de programme ROM comprennent par exemple un programme qui, lors de la mise sous tension de l'appareil contenant la carte, permet au microprocesseur d'aller chercher dans une zone de mémoire de la carte une configuration de bits qui est transférée dans l'appareil et stockée dans un registre REG placé à l'entrée du réseau logique programmable. La zone de mémoire dans laquelle on va chercher l'information nécessaire au fonctionnement de l'appareil peut être une zone de mémoire morte ou de préférence, pour faciliter la programmation individuelle des cartes, une zone de mémoire non volatile électriquement programmable (EPROM). Les bits sont de préférence introduits en série dans le registre et les sorties du registre sont connectées aux N entrées du réseau logique programmable PLA. Après exécution de ce programme de lancement, effectué par la carte elle-même, les bits transférés restent dans le registre et l'appareil peut fonctionner.

La sécurité sera d'autant plus élevée que le nombre de bits d'entrée du réseau logique programmable sera plus élevé.

Comme on l'a mentionné plus haut, on peut prévoir en outre que non seulement l'application de la configuration correcte de N bits dans le registre d'entrée du réseau fait fonctionner correctement l'amplificateur, mais aussi qu'elle déclenche le basculement d'un taquet commandé électromagnétiquement, ce taquet libérant alors l'appareil qui jusque là était bloqué dans son logement et ne pouvait pas être retiré.

On peut prévoir soit que le contenu du registre REG est comparé au contenu d'un autre registre de mémoire morte contenu dans l'appareil, pour libérer le taquet lorsque les contenus sont identiques mais pas lorsqu'ils sont différents. Ou encore on peut prévoir que c'est la sortie du réseau logique programmable qui est comparée au contenu d'un registre de mémoire morte pour libérer le taquet uniquement si la sortie du réseau et le contenu du registre se correspondent.

Pour autoriser l'utilisation de l'appareil par plusieurs personnes habilitées, on peut prévoir qu'il sera vendu avec un jeu de plusieurs cartes à mémoire.

## Revendications

1. Système de protection contre le vol, notamment d'appareils amovibles tels que des autoradios, comprenant une carte à mémoire (CP) comportant une information mémorisée spécifique de l'appareil à protéger, et un moyen dans l'appareil à protéger pour recevoir une information et n'autoriser le fonctionnement de l'appareil que si l'information lue est celle qui correspond à l'appareil considéré, caractérisé en ce qui il comporte un moyen pour interdire le retrait de l'appareil en l'absence de l'information mémorisée dans la carte et pour autoriser ce retrait en présence de cette information, et en ce que la carte est une carte à mémoire électronique comportant un microprocesseur pour aller lire l'information mémorisée et transférer l'information à l'appareil lors de la mise sous tension de l'appareil contenant la carte.

2. Système de protection selon la revendication 1, caractérisé en ce que l'appareil comporte un réseau logique programmable dont la programmation est spécifique de l'appareil considéré et est liée à l'information contenue dans la mémoire de la carte associée à cet appareil.

## Claims

1. System for protecting against the theft in particular of removable equipment such as car radios, comprising a memory card (CP) having a stored item of data specific to the equipment to be protected, and means in the equipment to be protected for receiving an item of data and allowing the equipment to function only if the data read is that which corresponds to the equipment in question, characterised in that it includes means for preventing the removal of the equipment in the absence of the data stored in the card and for allowing such removal when this data is present, and in that the card is an electronic memory card including a microprocessor for reading the stored data and transferring the data to the equipment when the equipment containing the card is energised.

2. Protection system according to Claim 1, characterised in that the equipment includes a programmable logic network, the programming of which is specific to the equipment in question and is related to the data contained in the memory of the card associated with this equipment.

## Patentansprüche

1. Diebstahlsicherungssystem, insbesondere für entnehmbare Geräte wie Autoradios, mit einer Speicherkarte (CP), die eine für das zu schützende Gerät spezifische gespeicherte Information enthält, und einem Mittel in dem zu schützenden Gerät zum Empfangen einer Information und zum Freigeben des Betriebs des Geräts nur dann, wenn die gelesene Information diejenige ist, die dem betroffenen Gerät entspricht, dadurch gekennzeichnet, daß es ein Mittel zum Unterbinden des Herausnehmens des Gerätes bei Fehlen der in der Karte gespeicherten Information und zum Freigeben dieses Entnehmens bei Anwesenheit dieser Information enthält, und daß die Karte eine Karte mit elektronischem Speicher ist, die einen Mikroprozessor zum Lesen der gespeicherten Information und zum Übertragen der Information zu dem Gerät beim Anlegen von Spannung an das die Karte enthaltende Gerät aufweist.

2. Schutzsystem nach Anspruch 1, dadurch gekennzeichnet, daß das Gerät ein programmierbares Logikfeld enthält, dessen Programmierung für das betroffene Gerät spezifisch ist und mit der Information verbunden ist, die in dem Speicher der dem Gerät zugeordneten Karte enthalten ist.
